# EUROPEAN PATENT APPLICATION

(11) **EP 1 713 268 A1**
(43) Date of publication of application: **18.10.2006**
(21) Application number: 05704148.5
(22) Date of filing: 20.01.2005
(51) Int. Cl.: H04N 5/91, H04N 5/85, G11B 20/10, G11B 20/12, G11B 27/00

(54) **DATA BROADCAST RECORDING/REPRODUCING METHOD, DEVICE, AND RECORDING MEDIUM**

(30) Priority: 20.01.2004 JP 2004012264
(71) Applicant: NEC CORPORATION, Minato-ku, Tokyo 108-8001 (JP); NEC Electronics Corporation, Kawasaki-shi, Kanagawa 211-8668 (JP); KABUSHIKI KAISHA TOSHIBA, Tokyo 105-8001 (JP)
(72) Inventor: ITOI, Satoshi, Tokyo 1088001 (JP); SAKAI, Noriaki, NEC Electronics Corporation, Kawasaki-shi, Kanagawa 2118668 (JP); NAKASHIKA, Masahiro, Intellectual Property Div., Tokyo 1058001 (JP); TSUMAGARI, Yasufumi, Intellectual Property Div., Tokyo 1058001 (JP); KIKUCHI, Shinichi, Intellectual Property Div., Tokyo 1058001 (JP)
(74) Representative: Vossius & Partner
(86) International application number: PCT/JP2005/001038
(87) International publication number: WO 2005/074269

(57) **Abstract**

To attain a state in which data broadcast and broadcast related information can be easily recorded in a recording device and at the same time all or a part of the recorded data can be cut out for reuse. A first file 501 includes management data 505 for managing broadcast or the like. A separate file 502 includes time map data 506. A second file 503 includes normal broadcast 507, program linked data broadcast 508, independent data broadcast 509, and independent audio broadcast 510. The extraction data copied or cut from the second file is recorded in a third file 504 as MPEG video data 511, MPEG audio data 512, JPEG data 513, PNG data 514, MNG data 515, or BML data 516 in accordance with a type of the data. Editing, deletion, processing, and particular reproduction can be performed on the extraction data recorded in the third file by referring to the management data 505.

## Description

### Technical Field

The present invention relates to a data broadcast recoding and reproduction method in a recording device such as a hard disc/DVD combo video recorder, a DVD stream recorder, or hard disc video recorder, and relates to a device and a recording medium.

### Background Art

Up to now, video and stream related application formats in a DVD (Digital Versatile Disc) are standardized such as a play-only DVD-Video format, an easily recording, reproducing, and editing DVD-VR (Video Recording) format, and a DVD-SR (Stream Recording) format for facilitating direct recording and reproduction of broadcast or transport stream.

DVD-Video is a disc play-only format for previously recording a content such as a movie and designed for a home theater as a main target. DVD-VR is a format mainly designed for digitalizing an analog video to record the video through MPEG-2 encoding. DVD-SR is a format basically designed for recording data sent as an MPEG stream as it is and designed for direct recording of digital broadcast as a main target. Currently, DVD-Video is spread across the world in the product form and also DVD-VR is being significantly spread but DVD-SR is not yet commercialized.

Here, in the case where analog broadcast is recorded on the basis of DVD-VR, no consideration is given to data broadcast recording. That is, if an attempt is made to record the data broadcast recording, for example, it is conceivable that data of the data broadcast is recorded by arranging into a PES_private_data file which is standardized in the MPEG-2 format.

Then, in the case where digital broadcast is directly recorded on the basis of DVD-SR, it is conceivable that no processing is performed on the digital broadcast and the digital broadcast is directly recorded.

Meanwhile, Japanese Unexamined Patent Application Publication No. 2003-288767 (Document 1) proposes a recording method with which multiple functions are realized while compatibility with respect to video/audio stream recording is maintained and at the same time optimum data transmission, reception, and recording can be performed with another image recording device such as video recording.

However, if an attempt is made to perform recording of the data broadcast through the above-mentioned recording method, there are encountered the following problems.

That is, when recording of analog or digital broadcast is performed through DVD-VR or DVD-Video, it is possible to record data of the data broadcast in the PES_private_data file, but no format is standardized for recording data as private data, thus disturbing the compatibility among different devices. Also, even when the compatibility is achieved, as the main broadcast and the data broadcast are multiplexed onto one stream, it is extremely difficult to separate the data of the data broadcast from the main broadcast for performing storage, editing, deletion, processing, particular reproduction, and the like.

In addition, when the digital broadcast is directly recorded on the basis of DVD-SR as well, regarding the separation of the data broadcast from the main broadcast, the content of the data broadcast, or data broadcast channels, a detail thereof cannot be found out until search is conducted in the recorded stream. Even when the detail is found out, as the main broadcast and the data broadcast are multiplexed onto one stream, it is extremely difficult to separate the data of the data broadcast from the main broadcast for performing storage, editing, deletion, processing, particular reproduction, and the like.

Moreover, Document 1 does not mention about the data broadcast recording or the problems at the time of the recording at all.

### Disclosure of Invention

An object of the present invention is to provide a data broadcast recording method capable of arbitrarily and easily performing a processing on data of data broadcast.

Another object of the present invention is to provide a recording medium on which data is recorded through the above-mentioned recording method.

Still another object of the present invention is to provide a device for recording and/or reproducing data through the above-mentioned recording method.

The present invention has been made to solve the above-mentioned problems. According to a first aspect, there is provided a data broadcast recoding method, including recording management data in a first file and recording normal broadcast and data broadcast in at least one file different from the first file.

In addition, according to a second aspect, in the data broadcast recoding method according to the first aspect, the normal broadcast and the data broadcast are commonly recorded in a second file.

In addition, according to a third aspect, in the data broadcast recoding method according to the first aspect, the normal broadcast is recorded in a second file, the data broadcast is recorded in the second file or a third file, and whether the data broadcast is recorded in the second file or the third file is indicated by a data broadcast recording file ID flag in the management data.

In addition, according to a fourth aspect, in the data broadcast recoding method according to the first aspect, the normal broadcast and the data broadcast is recorded in a second file, data obtained by copying or cutting all or a part of the data broadcast or all or a part of recorded data broadcast recorded in the second file is recorded in a third file as broadcast extraction data, and a content of the broadcast extraction data is indicated by a data broadcast ID flag in the management data.

Furthermore, according to a fifth aspect, in the data broadcast recoding method according to the first aspect, the normal broadcast and the data broadcast are recorded in a second file, data obtained by copying or cutting all or a part of the data broadcast or all or a part of recorded data broadcast recorded in the second file is recorded in any of third and subsequent files as broadcast extraction data in accordance with a combination of a data type and an encoding format, and a content of the broadcast extraction data is indicated by a data broadcast ID flag in the management data.

In addition, according to a sixth aspect, in the data broadcast recoding method according to the first aspect, the normal broadcast is recorded in a second file, the data broadcast is recorded in the second file or a third file, data obtained by copying or cutting all or a part of the data broadcast or all or a part of recorded data broadcast recorded in the second or third file is recorded in the third file or a fourth file as broadcast extraction data, whether the data broadcast is recorded in the second file or the third file is indicated by a data broadcast recording file ID flag in the management data, and a content of the broadcast extraction data is indicated by a data broadcast ID flag in the management data.

In addition, according to a seventh aspect, in the data broadcast recoding method according to the first aspect, the normal broadcast is recorded in a second file, the data broadcast is recorded in the second file or a third file, data obtained by copying or cutting all or a part of the data broadcast or all or a part of recorded data broadcast recorded in the second or third file is recorded in any of fourth and subsequent files as broadcast extraction data in accordance with a combination of a data type and an encoding format, whether the data broadcast is recorded in the second file or the third file is indicated by a data broadcast recording file ID flag in the management data, and a content of the broadcast extraction data is indicated by a data broadcast ID flag in the management data.

In addition, according to an eighth aspect, in the data broadcast recoding method according to the first aspect, broadcast related information is recoded in a file different from the first file and a file for recording the normal broadcast.

In addition, according to a ninth aspect, in the data broadcast recoding method according to the second aspect, broadcast related information is recorded in a third file, and content of the broadcast related information is indicated by a broadcast related information ID flag in the management data.

In addition, according to a tenth aspect, in the data broadcast recoding method according to the third aspect, broadcast related information is recorded in the third file or a fourth file as record broadcast related information, whether the broadcast related information is recorded in the third file or the fourth file is indicated by a broadcast related information recording file ID flag in the management data, a content of the record broadcast related information is indicated by a broadcast related information ID flag in the management data.

In addition, according to an eleventh aspect, in the data broadcast recoding method according to the fourth aspect, broadcast related information is recorded in the third file or a fourth file, data obtained by copying or cutting all or a part of the broadcast related information or all or a part of record broadcast related information recorded in the third file or the fourth file is recorded in the third file as related extraction data, whether the broadcast related information is recorded in the third file or the fourth file is indicated by a broadcast related information recording file ID flag in the management data, and a content of the record broadcast related information and a content of the related extraction data are indicated by a broadcast related information ID flag in the management data.

Furthermore, according to twelfth aspect, in the data broadcast recoding method according to the fifth aspect, broadcast related information is recorded in a new file, data obtained by copying or cutting all or a part of the broadcast related information or all or a part of record broadcast related information recorded in the new file is recorded as related extraction data in a file corresponding to the encoding format, which file the broadcast related information is recorded in is indicated by a broadcast related information recording file ID flag in the management data, and a content of the record broadcast related information and a content of the related extraction data are indicated by a broadcast related information ID flag in the management data.

In addition, according to thirteenth aspect, in the data broadcast recoding method according to the sixth aspect, broadcast related information is recorded in the third file or a fourth file as record broadcast related information, data obtained by copying or cutting all or a part of the broadcast related information or all or a part of the record broadcast related information is recorded in the third file as related extraction data, whether the broadcast related information is recorded in the third file or the fourth file is indicated by a broadcast related information recording file ID flag in the management data, a content of the record broadcast related information and a content of the related extraction data are indicated by a broadcast related information ID flag in the management data.

Furthermore, according to fourteenth aspect, in the data broadcast recoding method according to the seventh aspect, broadcast related information is recorded in a new file as record broadcast related information, data obtained by copying or cutting all or a part of the broadcast related information or all or a part of the record broadcast related information is recorded as related extraction data in a file corresponding to the encoding format, which file the broadcast related information is recorded in is indicated by a broadcast related information recording file ID flag in the management data, and a content of the record broadcast related information and a content of the related extraction data are indicated by a broadcast related information ID flag in the management data.

In addition, according to a fifteenth aspect, in the data broadcast recoding method according to any one of the eighth to fourteenth aspects, the broadcast related information includes all or a part of Internet additional information including Internet information related to broadcast, program additional information, director's cut information, director's comment information, E-commerce information, chat information, and preview information.

In addition, according to a sixteenth aspect, in the data broadcast recoding method according to any one of the fourth to seventh and eleventh to fourteenth aspects, the broadcast extraction data or the related extraction data includes all or a part of moving-picture data, still-picture data, audio data, animation data, graphic data, and character data.

In addition, according to a seventeenth aspect, in the data broadcast recoding method according to any one of the first to fourteenth aspects, the data broadcast includes program linked data broadcast, independent data broadcast, audio broadcast, or radio broadcast.

In addition, according to an eighteenth aspect, in the data broadcast recoding method according to any one of the third, sixth, seventh, ninth, thirteenth, and fourteenth aspects, if the data broadcast is program linked data broadcast, the data broadcast is recorded in the second file, and if the data broadcast is independent data broadcast, the data broadcast is recorded in the third file.

In addition, according to a nineteenth aspect, in the data broadcast recoding method according to any one of the first to fourteenth aspects, the data broadcast recording file ID flag in the management data or the broadcast related information recording file flag indicates whether the data broadcast or the broadcast related information is recorded in a relevant file or a file in which the data broadcast or the broadcast related information is recorded, and the data broadcast ID flag in the management data or the broadcast related information recording file flag indicates all or a part of whether the data broadcast or the broadcast related information is recorded in a relevant stream, whether the broadcast extraction data/the related extraction data is obtained through direct recording, copying, or move, and a file name, a source stream name, a source stream number, and a type and a compression method of the broadcast extraction data/the related extraction data if a source exists in the case in which the broadcast extraction data/the related extraction data is obtained by copying or move.

In addition, according to a twentieth aspect, in the data broadcast recoding method according to any one of the first to fourteenth aspects, all or a part of a flag indicating whether data broadcast is included in a record stream/whether data broadcast linked with the main broadcast is included/whether independent data broadcast that is not linked with the main broadcast is included/whether independent audio broadcast that is not linked with the main broadcast is included/whether Internet information or streaming data is included, a flag indicating a normal broadcast stream or a storage broadcast stream, a flag indicating a compression method, a flag indicating whether a transmission method of the data broadcast is a data carrousel mode/an event message transmission mode/a mode including both the modes, a flag indicating whether the mode is a mode for recording all the broadcast data or a mode for recording only refresh data in the case of the data carrousel mode, a flag indicating whether auto renewal is performed in the case in which the broadcast extraction data/the related extraction data is news, weather forecast, stock information, or the like, a flag indicating whether a updated data refresh time and a time map exist, is recorded in the first file.

In addition, according to a twenty-first aspect, in the data broadcast recoding method according to the eighteenth or nineteenth aspect, the flag indicating the compression method includes all or a part of a moving-picture data compression method flag indicating a type of MPEG video, H.264 video, or Windows (registered trademark) Media video, an audio data compression method flag indicating a type of MPEG audio, Dolby audio, or DTS audio, a still-picture data compression method flag indicating a type of JPEG or PNG.

Also, according to another mode of the present invention, there is provided a data recording device for recording data through the data broadcast recoding method according to any one of the first to fourteenth aspects and/or a data reproduction device for reproducing data recorded through the data broadcast recoding method.

Furthermore, according to another mode of the present invention, there is provided a recording medium on which recording is performed through the recoding method according to any one of the first to fourteenth aspects.

### Effect of the Invention

In the present invention, the management data is recorded in the first file and the normal broadcast and the data broadcast are recorded in the second file. As a result, according to the present invention, there is provided an effect in which it is possible to easily record the data broadcast, and at the same time the recorded data broadcast can be separated from the main broadcast, thereby easily realizing the storage, editing, deletion, processing, particular reproduction, and the like.

In this case, as all or a part of the data broadcast recorded in the second file is copied or moved to the third file and the data broadcast ID flag in the management data indicates the content of the data broadcast copied or moved to the third file, the processing on the above-mentioned data broadcast is facilitated. Here, the copied or moved data may be all or a part of moving-picture data, still-picture data, audio data, animation data, graphic data, and character data. In addition, all or a part of Internet information related to broadcast, program additional information, director's cut information, director's comment information, E-commerce information, chat information, and preview information may be recorded in a file different from the second file for recording the normal broadcast.

In other words, according to the present invention, by separating the file for recording the broadcast from the file for recording the broadcast related data, the data broadcast can be easily recorded, and at the same time the recorded data broadcast can be separated from the main broadcast, thereby, easily realizing the storage, editing, deletion, processing, particular reproduction, and the like.

### Brief Description of the Drawings

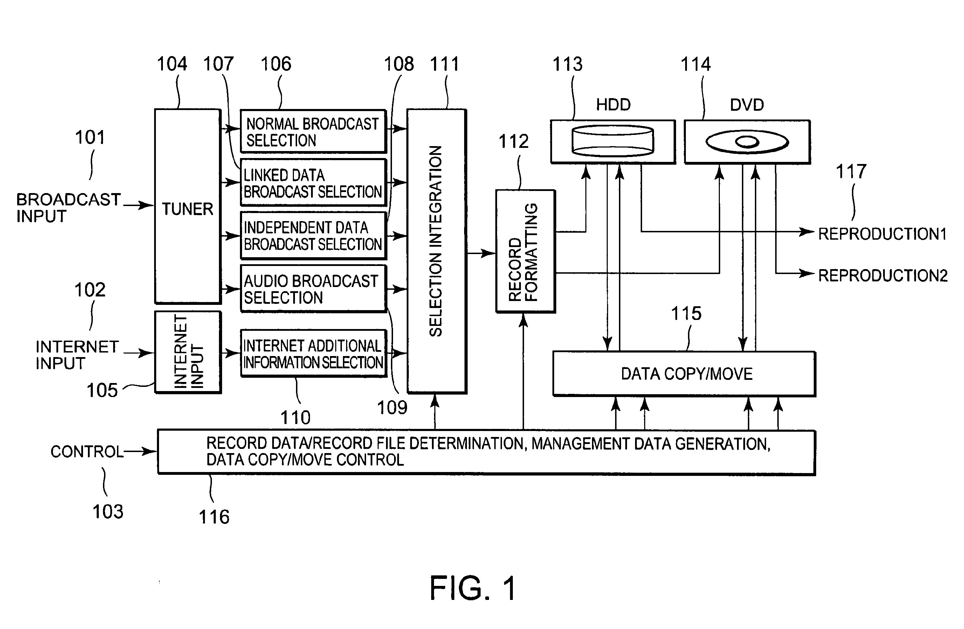

FIG. 1 is a block diagram showing an entire configuration of a data recording and reproduction device for realizing data broadcast recording according to the present invention,

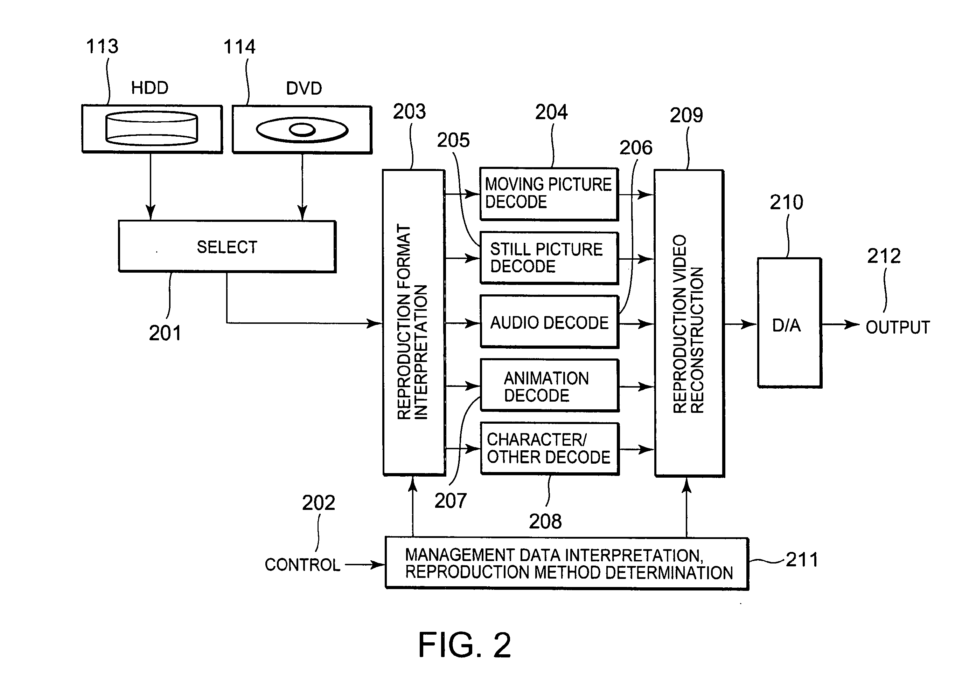

FIG. 2 is a block diagram specifically showing a part for reproduction output of data broadcast, audio broadcast, and Internet additional information,

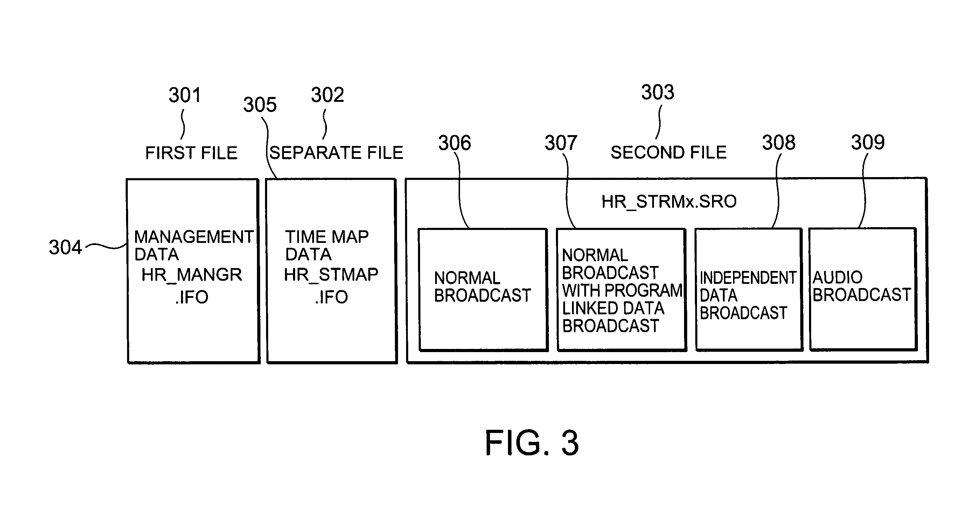

FIG. 3 is a block diagram for describing a recording method according to an embodiment of the present invention,

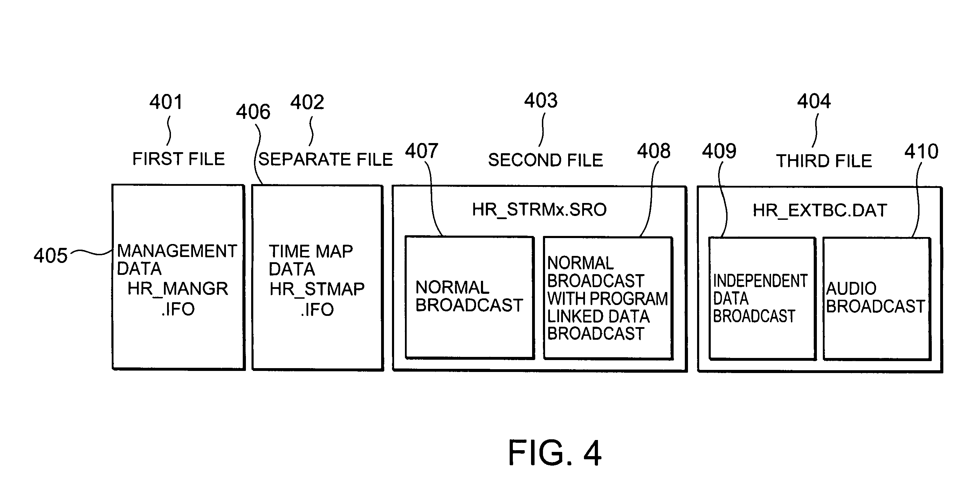

FIG. 4 is a diagram for describing a recording method according to another embodiment of the present invention, showing an example in which management data is recorded in the first file, time map data is recorded in a separate file, normal broadcast and program linked data broadcast are recorded in the second file, and independent data broadcast is recorded in the third file,

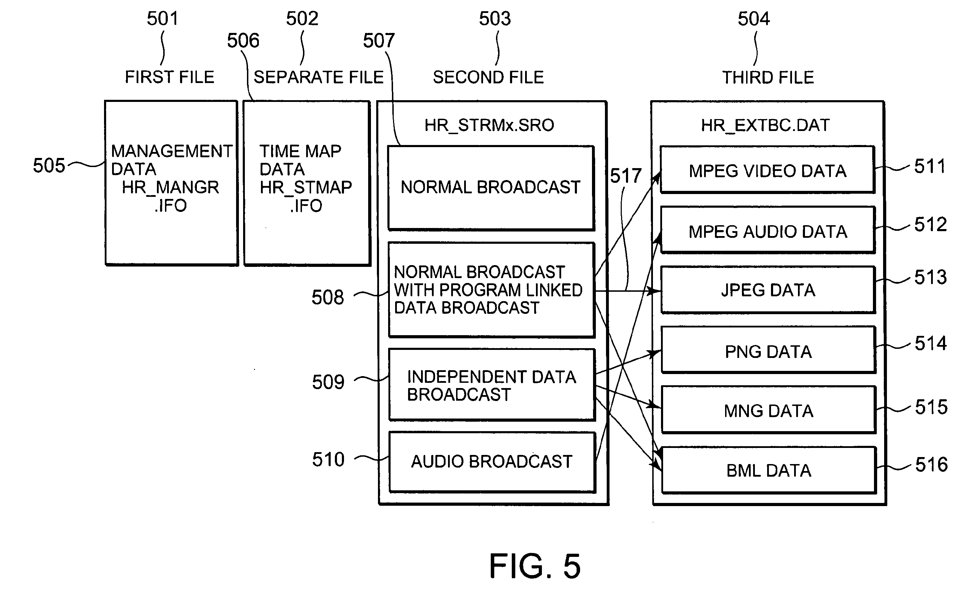

FIG. 5 is a diagram for describing a recording method according to still another embodiment of the present invention, showing an example in which after management data is recorded in the first file, time map data is recorded in a separate file, and normal broadcast and data broadcast are recorded in the same second file, a part of the data broadcast recorded in the second file is copied in the third file,

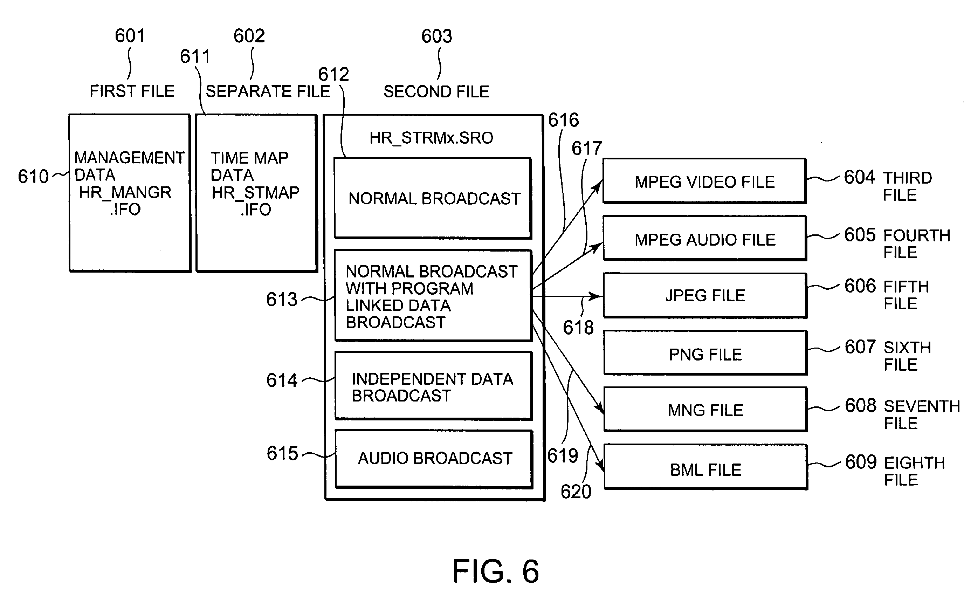

FIG. 6 is a diagram for describing a recording method according to another embodiment of the present invention, showing an example in which management data is recorded in the first file, time map data is recorded in a separate file, and normal broadcast and data broadcast are recorded in the second file, and a part of the data broadcast recorded in the second file is copied in the same type one of the third and subsequent data files,

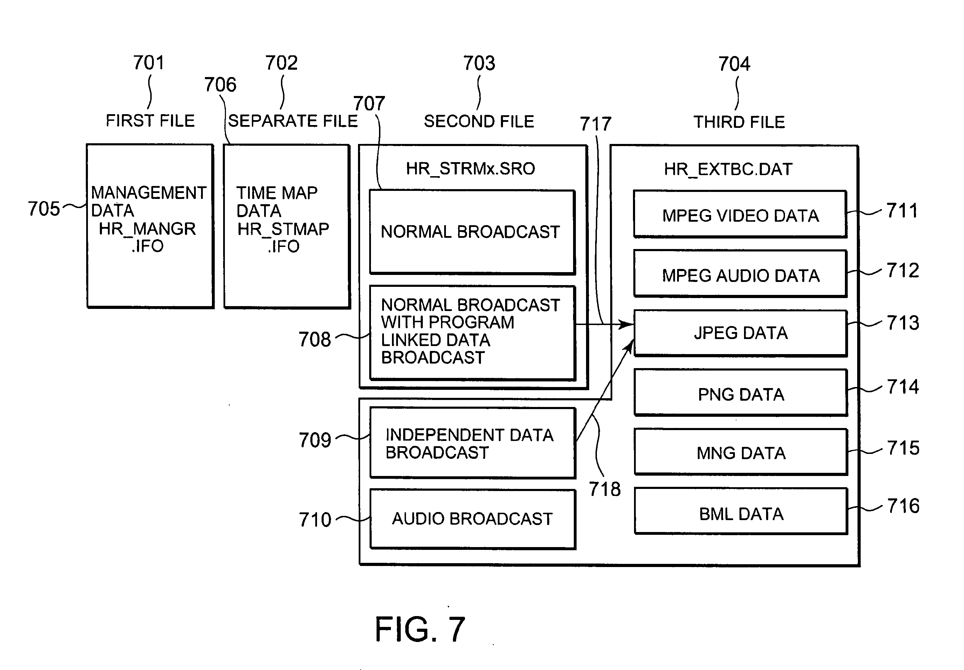

FIG. 7 is a diagram for describing a recording method according to still another embodiment of the present invention, showing an example in which after management data is recorded in the first file, time map data is recorded in a separate file, normal broadcast and linked data broadcast are recorded in the second file, and independent data broadcast is recorded in the third file, a part of the linked data broadcast and a part of the independent data broadcast are copied in the third file,

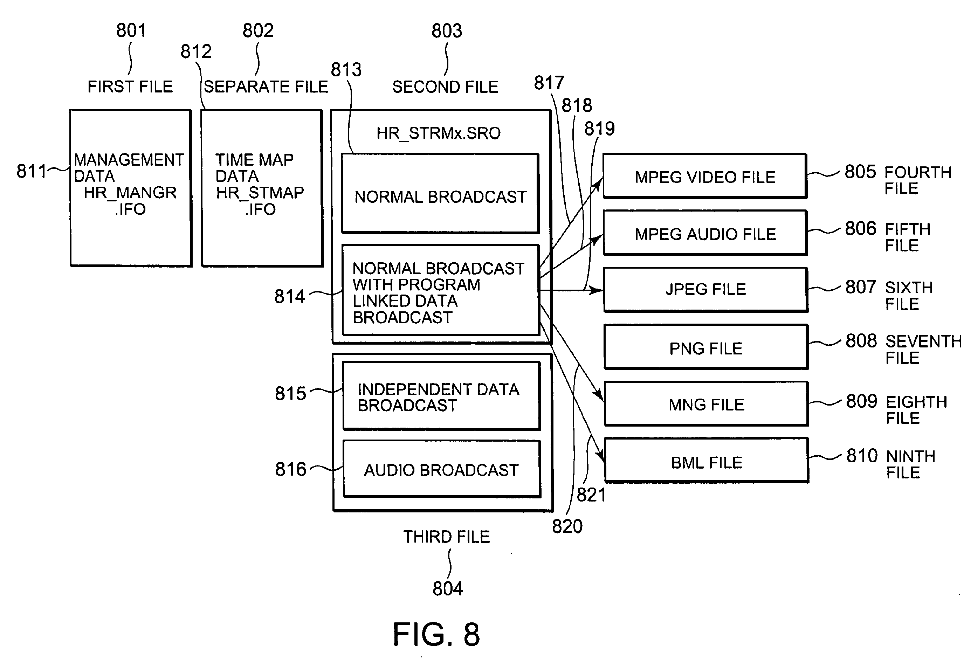

FIG. 8 is a diagram for describing a recording method according to still another embodiment of the present invention, showing an example in which management data is recorded in the first file, time map data is recorded in a separate file, normal broadcast and program linked data broadcast are recorded in the second file, independent data broadcast and independent audio broadcast are recorded in the third file, and a part of the data broadcast recorded in the second or third file is copied in the same type one of the fourth and subsequent data files,

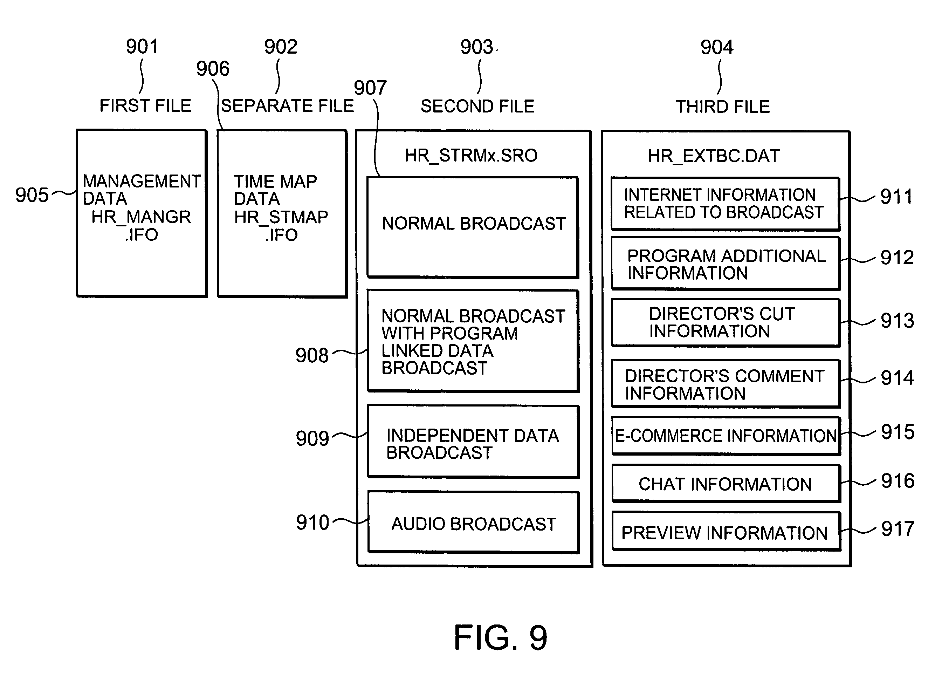

FIG. 9 is a diagram for describing a recording method according to still another embodiment of the present invention, showing an example in which management data is recorded in the first file, time map data is recorded in a separate file, normal broadcast and data broadcast are recorded in the same second file, and Internet related information related to broadcast is recorded in the third file,

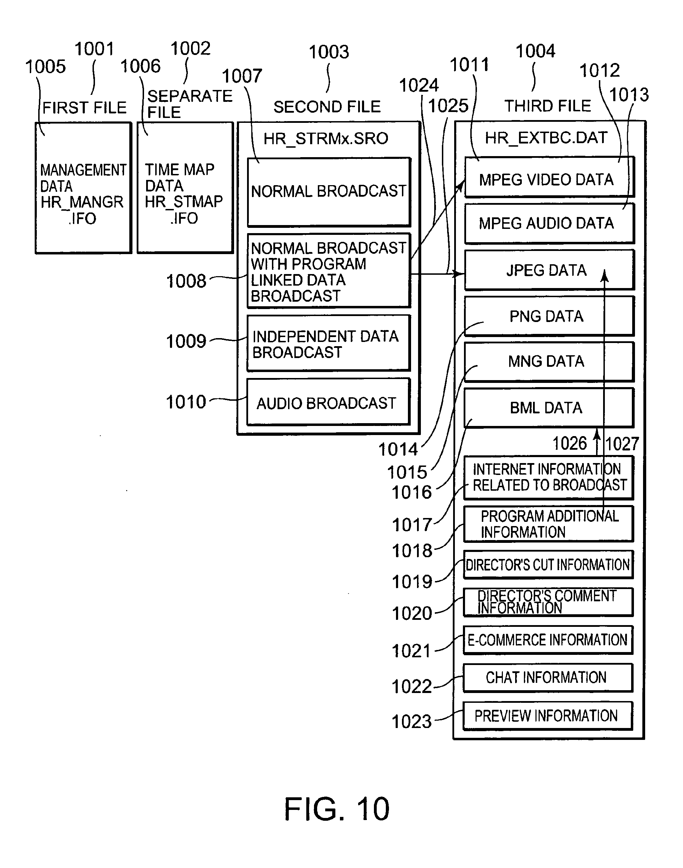

FIG. 10 is a diagram for describing a recording method according to another embodiment of the present invention, showing an example in which after management data is recorded in the first file, time map data is recorded in a separate file, normal broadcast and data broadcast are recorded in the same second file, and Internet related information related to broadcast is recorded in the third file, the second/third file is copied into the third file,

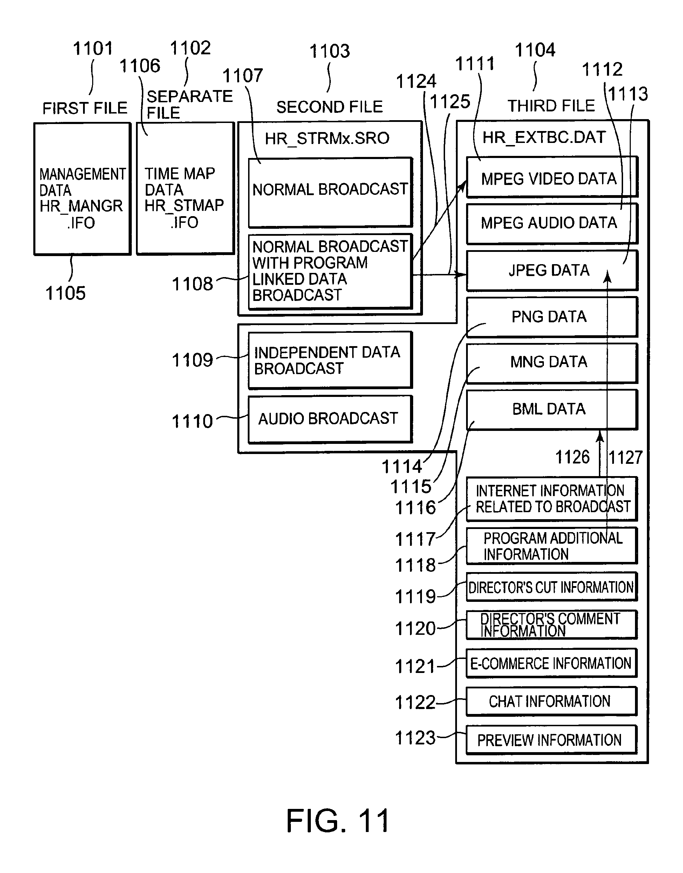

FIG. 11 is a diagram for describing a recording method according to another embodiment of the present invention, showing an example in which after management data is recorded in the first file, time map data is recorded in a separate file, normal broadcast and linked data broadcast are recorded in the second file, and independent data broadcast, independent audio broadcast and Internet related information related to broadcast are recorded in the third file, the second/third file is copied into the third file,

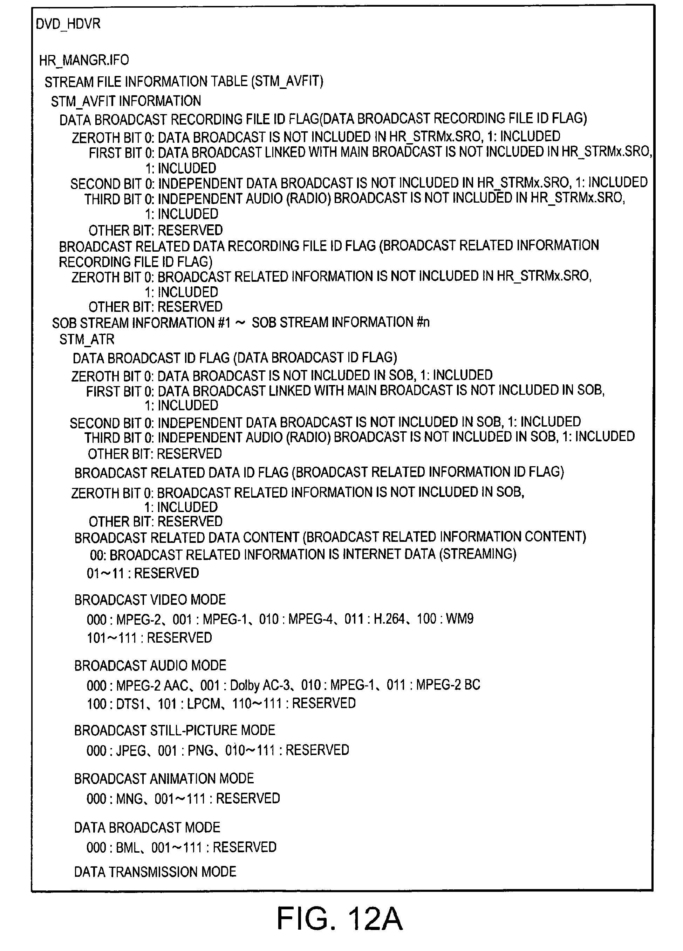

FIG. 12A is a diagram showing a part of a configuration example of a DVD_HDVR file used in the present invention,

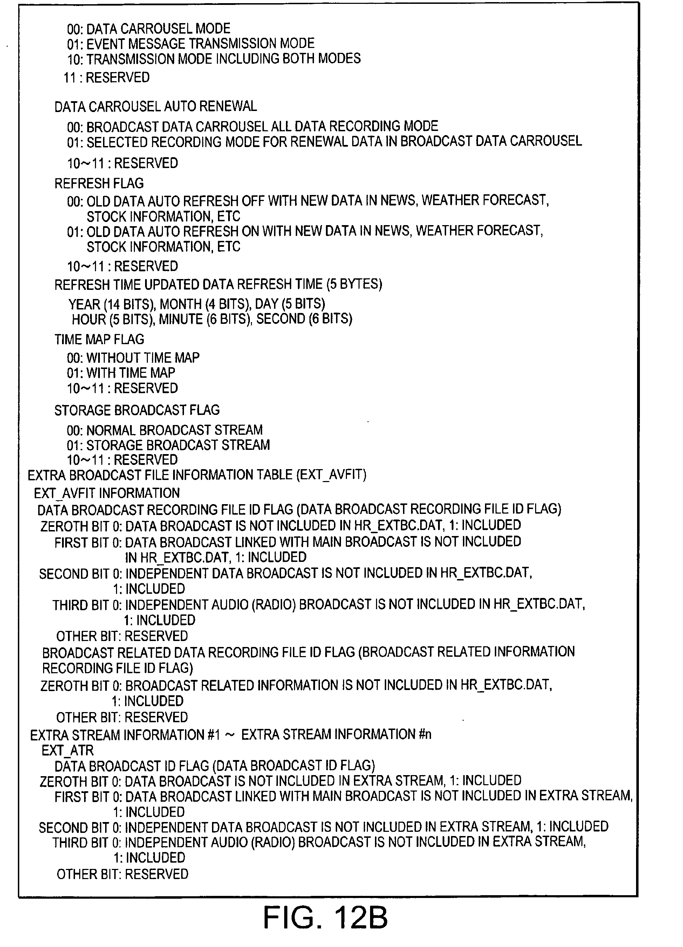

FIG. 12B is a diagram showing another part of a configuration example of the DVD_HDVR file used in the present invention,

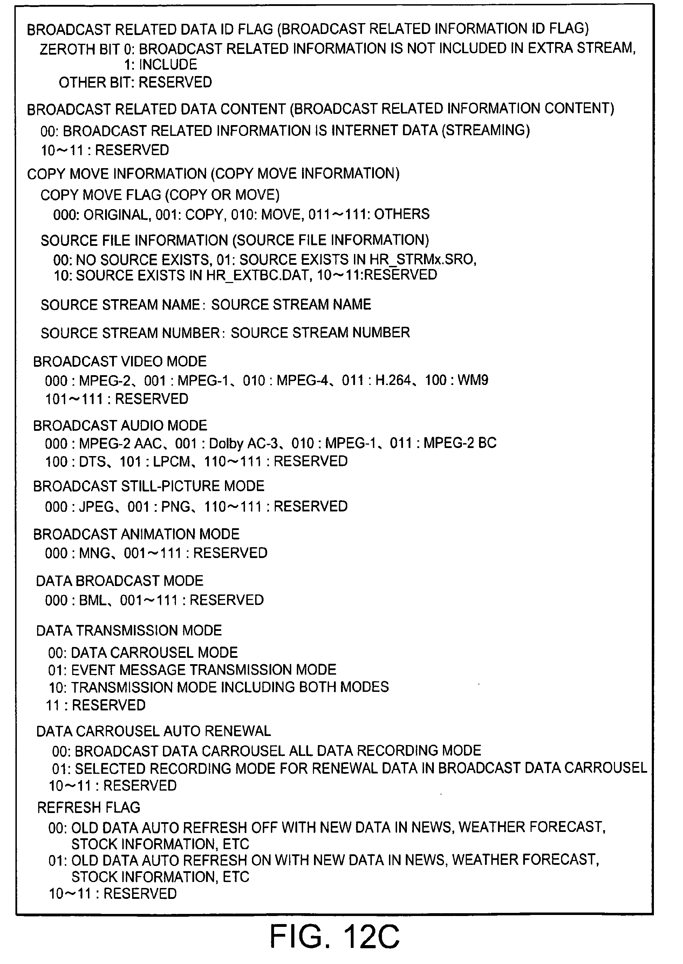

FIG. 12C is a diagram showing still another part of a configuration example of the DVD_HDVR file used in the present invention, and

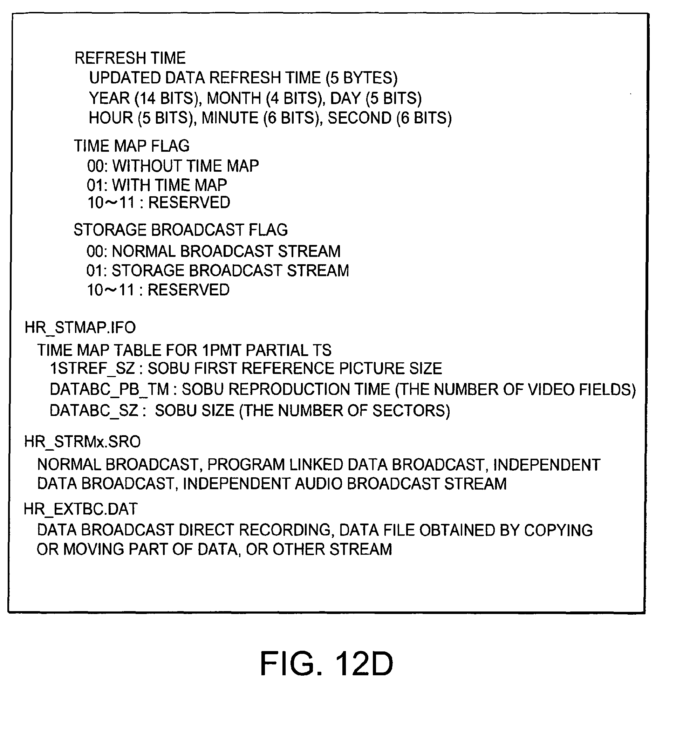

FIG. 12D is a diagram showing yet still another part of a configuration example of the DVD_HDVR file used in the present invention.

### Best Mode for Carrying Out the Invention

With reference to FIGS. 1 to 12D, embodiments according to the present invention will be described.

FIG. 1 shows a data broadcast recording and reproduction device for realizing data broadcast recording according to the present invention. It should be noted that each block in the device is exemplified when realized by mainly using software but each block may be realized by using hardware.

In FIG. 1, an example is shown in which data broadcast, audio broadcast, and Internet additional information are recorded by using a hard disc drive (HDD) or a DVD (Digital Versatile Disc) video recorder in a hard disc or a DVD.

A broadcast wave 101 is input to the data broadcast recording and reproduction device of Fig. 1 from a reception section not shown. The broadcast wave 101 is all or a part of normal broadcast without linked data broadcast, normal broadcast with linked data broadcast, independent data broadcast, and audio broadcast. These are all transport streams (TS).

In addition, Internet additional information 102 is input to the data broadcast recording and reproduction device as an example of broadcast related information. The Internet additional information 102 includes Internet information related to the broadcast, program additional information, director's cut information, director's comment information, E-commerce information, chat information, preview information, and the like. Basically, these are not TS, but much the same is true on even when these are TS.

Furthermore, a control signal 103 is input to the data broadcast recording and reproduction device. The control signal 103 is a signal for specifying a type, which is the data broadcast, the audio broadcast, the Internet additional information 102 or the like, of information to be recorded and for specifying a recording method, and is a user operation signal given by a user. It should be noted that the above-mentioned broadcast wave 101, the Internet additional information 102, and the control signal 103 may be input in a simultaneous way or input individually. Herein, the normal broadcast wave may be an analog broadcast wave.

The broadcast wave 101 is demodulated and decoded by a tuner 104 to be output to a normal broadcast selection section 106, a linked data broadcast selection section 107, an independent data broadcast selection section 108, and an audio broadcast selection section 109. The normal broadcast selection section 106, the linked data broadcast selection section 107, the independent data broadcast selection section 108, and the audio broadcast selection section 109 respectively select the normal broadcast without linked data broadcast, the normal broadcast with linked data broadcast, the independent data broadcast, and the audio broadcast to be output to a selection integration section 111.

The Internet additional information 102 is input via an Internet input section 105 to an Internet additional information selection section 110 and selected to be output to the selection integration section 111.

The selection integration section 111 selects and integrates at least one of the normal broadcast without linked data broadcast, the normal broadcast with linked data broadcast, the independent data broadcast, the audio broadcast, and the Internet additional information as data to be recorded to be output to a record formatting section 112.

The record formatting section 112 performs record formatting on the record data input from the selection integration section 111 to specify the record file and generates management data in accordance with a type of data to be recorded on the basis of the control signal 103 to be recorded in a HDD 113 or a DVD 114 as a dedicated management data file or time map data file. A detailed description will be given of a record file structure later. That is, in this embodiment, the management data corresponding to the control signal 103 that is the user operation signal is recorded in the HDD 113 or the DVD 114. Herein the HDD 113 and the DVD 114 respectively represent a hard disc and an optical disc recording medium.

A data copy/move section 115 is a block for performing copy or move of data in the data broadcast, the audio broadcast, and/or the Internet additional information to another file or another group. A content and procedure of the data copy or move will be described in detail later.

The control signal 103 instructs a record control section 116 about record data/record file decision, management data generation, and data copy/move control. To elaborate, the control signal 103 specifies which data is selected and integrated in the selection integration section 111 and which format the conversion is made into in the record formatting section 112, and also specifies the record format and the record file. Then, the control signal 103 generates management data of the selected and integrated data in the record control section 116 and records the management data in the HDD 113 or the DVD 114 as the dedicated management data file or time map data file. A record file structure will be described in detail later. At the same time, the control signal 103 specifies the data copy/move method for the record control section 116 with respect to the data copy/move section 115.

Duplication of the data recorded in the HDD 113 and the DVD 114 is performed between them and also the data is output to the outside as a reproduction signal 117. As shown in the drawing, the reproduction may be performed as reproduction 1 from the HDD 113 and performed as reproduction 2 from the DVD 114. Alternatively, a selector (refer to FIG. 2) for selecting one of the reproduction 1 and the reproduction 2 may be used for output as one system.

FIG. 2 is a block diagram of a data reproduction device for reproducing and outputting data broadcast, audio broadcast, and Internet additional information.

A signal reproduced from the HDD 113 and the DVD 114 is selected by a selection section 201 and then input to a reproduction format interpretation section 203.

Also, at the same time, a control signal 202 is input to a reproduction control section 211 through an operation by the user. The control signal 202 is a control input for causing the reproduction control section 211 to perform management data interpretation and determine the reproduction method.

The reproduction format interpretation section 203 interpret a format of the reproduction signal input from the selection section 201 and outputs the reproduction signal to decoding sections 204 to 208 corresponding to the format. For example, the reproduction format interpretation section 203 outputs the reproduction signal to the moving-picture decoding section 204 in the case of an MPEG moving picture, to the still-picture decoding section 205 in the case of a JPEG still picture, to the audio decoding section 206 in the case of an MPEG-2 AAC audio, to the animation decoding section 207 in the case of an MNG animation, and to the character/other decoding section 208 in the case of a character, or the like.

The output signal from the reproduction format interpretation section 203 is decoded in the moving-picture decoding section 204, the still-picture decoding section 205, the audio decoding section 206, the animation decoding section 207, and the character/other decoding section 208 in accordance with the respective formats and output to a reproduction image reconstruction section 209.

The reproduction video reconstruction section 209 reconstructs a reproduction video signal through overlay or the like from a video, an audio, and data decoded on the basis of the respective formats. The reproduction video signal is digital/analog converted in a D/A converter 210.

Then, the reproduction control section 211 specifies the reproduction data and performs the reproduction format interpretation control for the reproduction format interpretation section 203, and performs the reproduction video reconstruction control such as the overlay for the reproduction image reconstruction section 209.

A reproduction output signal 212 including the video, the audio, and the data is output from the D/A converter 210 to the outside.

With reference to FIG. 3, a data broadcast recording method according to an embodiment of the present invention will be described. According to the recording method according to the embodiment of the present invention, management data is recorded in the first file and normal broadcast and data broadcast are commonly recorded in the second file. In this recording method, in accordance with the management data, a processing on the broadcast data or the like is performed, and as a result, storage, editing, and the like of the broadcast data are facilitated.

Herein, the data broadcast includes a program linked data broadcast and independent data broadcast.

The program linked data broadcast is, so to speak, data broadcast linked with television broadcast, which is included in normal broadcast with program linked data broadcast. For example, this refers to a player introduction in a World Cup football program, a team introduction, a player introduction, a support message from a fan, and a game result in a high school national baseball tournament program, and the like.

The independent data broadcast is data broadcast which is separated from a television program and independently broadcast only with data such as a photograph and character information. This refers to news, weather forecast, stock price, horoscope, and the like, which are broadcast irrespectively of the television program.

In addition, one mode of the data broadcast is audio broadcast. The audio broadcast is only broadcast with audio alone.

In FIG. 3, reference numeral 301 denotes the first file, reference numeral 302 denotes a separate file, and reference numeral 303 denotes the second file.

The first file (HR_MANGR_IFO_) 301 includes management data 304. The management data 304 will be described in detail later.

The separate file (HR_STAMP_IFO) 302 includes time map data 305. The time map data 305 is a map showing a relation between a record time and a record position of data, which is typified by normal broadcast 306, included in the second file 303.

It should be noted that in FIG. 3, the management data 304 is included in the first file 301 and the time map data 305 is included in the separate file 302, but both the management data 304 and the time map data 305 may be included in the first file 301. In that case, the separate file 302 does not exist.

In the second file (HR_STRMx.SRO) 303, normal broadcast without data broadcast 306, normal broadcast with program linked data broadcast 307, independent data broadcast 308, and independent audio broadcast 309 are recorded.

FIG. 4 shows an example in which a data broadcast recording method according to another embodiment of the present invention. Herein, management data is recorded in the first file, time map data is recorded in a separate file, normal broadcast and program linked data broadcast are recorded in the second file, and independent data broadcast is recorded in the third file.

To be specific, in FIG. 4, reference numeral 401 denotes the first file, reference numeral 402 denotes the separate file, reference numeral 403 denotes the second file, and reference numeral 404 denotes the third file.

The first file 401 includes management data 405. The management data 405 will be described in detail later.

The separate file 402 includes time map data 406. The relation between the separate file 402 and the time map data 406 is the same as that of FIG. 3.

The second file 403 includes normal broadcast 407 and program linked data broadcast 408. The third file 404 includes independent data broadcast 409 and independent audio broadcast 410. According to this configuration, the program linked data broadcast 408 and the independent data broadcast 409 are included in different files, so it is possible to perform data broadcast management and editing for every file, thereby providing an effect in which the management and the editing are facilitated.

FIG. 5 shows an example as still another embodiment of the present invention, in which after management data is recorded in the first file, time map data is recorded in a separate file, and normal broadcast and data broadcast are recorded in the same second file, a part of the data broadcast recorded in the second file is copied as broadcast extraction data in the third file.

In FIG. 5, reference numeral 501 denotes the first file, reference numeral 502 denotes the separate file, reference numeral 503 denotes the second file, and reference numeral 504 denotes the third file.

The first file 501 includes management data 505. The management data 505 will be described in detail later.

The separate file 502 includes time map data 506. The relation between the separate file 502 and the time map data 506 is the same as that of FIG. 3.

The second file 503 includes normal broadcast 507, normal broadcast with program linked data broadcast 508, independent data broadcast 509, and independent audio broadcast 510.

The third file 504 includes broadcast extraction data. The broadcast extraction data for example includes MPEG video data 511, MPEG audio data 512, JPEG data 513, PNG data 514, MNG data 515, and BML data 516. It should be noted that in the third file 504, video data, audio data, and character data based on other formats may exist.

Arrows in FIG. 5 show examples of necessary data copying from the normal broadcast with program linked data broadcast 508 to the MPEG video data 511, the JPEG data 513, and the BML data 516, from the independent data broadcast 509 to the PNG data 514, the MNG data 515, and the BML data 516, and from the independent audio broadcast 510 to the MPEG audio data 512. For example, when the normal broadcast with program linked data broadcast 508 is sport news, it is possible to copy only a football goal moment scene 517 included therein to be included into the JPEG data 513 in the third file 504. "The football goal moment scene" 517 included in the JPEG data 513 can be used for other application, stored in the form of a still-picture album, or subjected to editing, deletion, processing, or particular reproduction alone.

In a similar manner, it is possible that a moving picture is taken out as an MPEG moving picture from the second file 503 to be recorded in the third file, only singing voice data of a favorite singer is taken out to be recorded as Dolby AC-3 data, and only a preferred character is taken out to be recorded as animation MNG data.

In the above description, as an example, a part of the data is taken out but all of the data may be taken out. Also, instead of "copying", the data may be cut, or "moved", from the second file (the original data is deleted). In addition, all or a part of the data may be directly recorded in the third file at the same time when the broadcast is recorded in the second file. Such copy and move are performed by referring to the management data 505 in the first file 501 in accordance with a control signal generated on the basis of the operation by the user. With this configuration, there is provided an advantage in which the management of the data broadcast can be performed by referring to the data in the third file 504.

FIG. 6 shows an example in which management data is recorded in the first file, time map data is recorded in a separate file, and normal broadcast and data broadcast are recorded in the second file, and a part of the data broadcast recorded in the second file is copied to be recorded in the third to eighth files sorted in accordance with a combination of the data type and encoding format. That is, an example is shown in which from the second file, a moving picture of the same encoding format, a still picture of the same encoding format, an audio of the same encoding format, an animation of the same encoding format, and character data of the same encoding format are copied into the same files of the third and subsequent files, respectively.

In FIG. 6, reference numeral 601 denotes the first file, reference numeral 602 denotes the separate file, reference numeral 603 denotes the second file, reference numeral 604 denotes the third file, reference numeral 605 denotes the fourth file, reference numeral 606 denotes the fifth file, reference numeral 607 denotes the sixth file, reference numeral 608 denotes the seventh file, and reference numeral 609 denotes the eighth file.

The first file 601 includes management data 610. The management data 610 will be described in detail later.

The separate file 602 includes time map data 611. The relation between the separate file 602 and the time map data 611 is the same as that of FIG. 3.

The second file 603 includes normal broadcast 612, normal broadcast with program linked data broadcast 613, independent data broadcast 614, and independent audio broadcast 615.

The third file is the MPEG video file 604. The fourth file is the MPEG audio file 605. The fifth file is the JPEG file 606. The sixth file is the PNG file 607. The seventh file is the MNG file 608. The eighth file is the BML file 609. It should be noted that with respect to the files 604 to 609, video, audio, and data files based on other formats may exist.

In FIG. 6, arrows are shown in which a part of the normal broadcast with program linked data broadcast 613 is copied to be recorded in the third file 604 or the like. For example, when the normal broadcast with program linked data broadcast 613 recorded in the second file 603 is a music program "oo song contest", an animation 616 for featuring a singer, a song (audio) 617, a still picture 618 for featuring a costume, a character animation 619 for representing a singer, and character data 620 of the singer's profile are respectively taken out to be copied in the third file (the MPEG video file) 604 as the MPEG data, in the fourth file (the MPEG ACC audio file) 605 as MPEG ACC audio data, in the fifth file (the JPEG data file) 606 as JPEG data, in the seventh file (the MNG data file) 608 as animation data, and in the eighth file (the BML data file) 609 as character data. These data files 604 to 609 can be used for other application, stored in the form of a moving picture/still picture/audio/animation/character data album, or subjected to editing, deletion, processing, or particular reproduction alone. Such processings on the data broadcast are performed on the basis of the management data 610 in the first file 601.

In the above description, as an example, a part of the data is taken out but all of the data may be taken out. Also, instead of "copying", the data may be cut, or "moved", from the second file (the original data is deleted). In addition, all or a part of the data may be directly recorded in the third file 604 or the like at the same time when the broadcast is recorded in the second file 603. With this configuration, the predetermined processing can be performed by individually referring to the files including the individual data.

FIG. 7 shows an example in which after management data is recorded in the first file, time map data is recorded in a separate file, normal broadcast and normal broadcast with linked data broadcast are recorded in the second file, and independent data broadcast is recorded in the third file, a part of the linked data broadcast and a part of the independent data broadcast are copied in the third file.

In FIG. 7, reference numeral 701 denotes the first file, reference numeral 702 denotes the separate file, reference numeral 703 denotes the second file, and reference numeral 704 denotes the third file.

The first file 701 includes management data 705. The management data 705 will be described in detail later.

The separate file 702 includes time map data 706. The relation between the separate file 702 and the time map data 706 is the same as that of FIG. 3.

A difference from FIG. 6 resides in that the second file 703 includes normal broadcast 707 and normal broadcast with program linked data broadcast 708, and the third file 704 includes independent data broadcast 709 and independent audio broadcast 710. As shown in FIG. 7, the third file 704 further includes an MPEG video data 711, an MPEG audio data 712, a JPEG data 713, a PNG data 714, an MNG data 715, and a BML data 716. It should be noted that in the third file 704, video, audio, and data based on other formats may exist.

In FIG. 7, arrows are shown in which a part of the normal broadcast with program linked data broadcast 708 and a part of the independent data broadcast 709 are copied to be recorded in the third file 704 as broadcast extraction data. For example, when both the normal broadcast with program linked data broadcast 708 and the independent data broadcast 709 are weather forecasts, matters related to Tokyo area are taken out to provide Tokyo area weather forecasts 717 and 718, which are then copied in the third file 704 as the JPEG data 713. The JPEG data "Tokyo area weather forecast" 713 can be used for other application, stored in the form of a still-picture album, or subjected to editing, deletion, processing, or particular reproduction alone.

In a similar manner, it is possible that a moving picture is taken out from the broadcast recorded in the second file 703 or the third file 704 to be recorded in the third file as the MPEG data, only singing voice data of a favorite singer is taken out to be recorded as Dolby AC-3 data, and only a preferred character is taken out to be recorded as animation data MNG data.

In the above description, as an example, a part of the data is taken out but all of the data may be taken out. Also, instead of "copying", the data may be cut, or "moved", from the second file (the original data is deleted). In addition, all or a part of the data may be directly recorded in the third file at the same time when the broadcast is recorded in the second file or the third file.

Then, the independent data broadcast 709 and the audio broadcast 710 may be recoded in the third file 704, the broadcast extraction data 716 such as the MPEG video data 711 may be recorded in the fourth file (not shown).

FIG. 8 shows an example in which management data is recorded in the first file, time map data is recorded in a separate file, normal broadcast and program linked data broadcast are recorded in the second file, independent data broadcast and independent audio broadcast are recorded in the third file, and a part of the data broadcast recorded in the second or third file is copied to be recorded in the fourth to ninth files sorted in accordance with a combination of the data type and the encoding format. That is, an example is shown in which from the second or third file, a moving picture of the same encoding format, a still picture of the same encoding format, an audio of the same encoding format, an animation of the same encoding format, and character data of the same encoding format are copied into the same files of the fourth and subsequent files, respectively.

In FIG. 8, reference numeral 801 denotes the first file, reference numeral 802 denotes the separate file, reference numeral 803 denotes the second file, reference numeral 804 denotes the third file, reference numeral 805 denotes the fourth file, reference numeral 806 denotes the fifth file, reference numeral 807 denotes the sixth file, reference numeral 808 denotes the seventh file, and reference numeral 809 denotes the eighth file.

The first file 801 includes management data 811. The management data 811 will be described in detail later.

The separate file 802 includes time map data 812. The relation between the separate file 802 and the time map data 812 is the same as that of FIG. 3.

The second file 803 includes normal broadcast 813 and normal broadcast with program linked data broadcast 814.

The third file 804 includes independent data broadcast 815 and independent audio broadcast 816.

The fourth file 805 is the MPEG video file. The fifth file 806 is the MPEG audio file. The sixth file 807 is the JPEG file. The seventh file 808 is the PNG file. The eighth file 809 is the MNG file. The ninth file 810 is the BML file 609. It should be noted that with respect to the files 805 to 810, video, audio, and data files based on other formats may exist.

In FIG. 8, arrows are shown in which a part of the normal broadcast with program linked data broadcast 814 is copied to be recorded in the fourth file 805 or the like. For example, when the normal broadcast with program linked data broadcast 814 is a music program "oo song contest", an animation 817 for featuring a singer, a song (audio) 818, a still picture 819 for featuring a costume, a character animation 820 for representing a singer, and character data 821 of the singer's profile are respectively taken out to be copied in the fourth file (the MPEG video file) 805 as the MPEG data, in the fifth file (the MPEG ACC audio file) 806 as MPEG ACC audio data, in the sixth file (the JPEG data file) 807 as JPEG data, in the eighth file (the MNG data file) 809 as animation data, and in the ninth file (the BML data file) 810 as character data. These data files 805 to 810 can be used for other application, stored in the form of a moving picture/still picture/audio/animation/character data album, or subjected to editing, deletion, processing, or particular reproduction alone.

In the above description, as an example, a part of the data is taken out but all of the data may be taken out. Also, instead of "copying", the data may be cut, or "moved", from the second file or the third file (the original data is deleted). In addition, all or a part of the data may be directly recorded in any of the fourth and subsequent files at the same time when the broadcast is recorded in the second or third file.

FIG. 9 shows an example in which management data is recorded in the first file, time map data is recorded in a separate file, normal broadcast and data broadcast are commonly recorded in the second file, and broadcast related information is recorded in the third file as record broadcast related information. The broadcast related information includes, for example, Internet information related to the broadcast, program additional information, director's cut information, director's comment information, E-commerce information, chat information, preview information, and the like.

Herein, the broadcast related information indicates broadcast related data other than the broadcast. In addition to the Internet information, telephone information, FAX information, information of other recording medium, and the like are conceivable, but other information may be used.

In FIG. 9, reference numeral 901 denotes the first file, reference numeral 902 denotes the separate file, reference numeral 903 denotes the second file, and reference numeral 904 denotes the third file.

The first file 901 includes management data 905. The management data 905 will be described in detail later.

The separate file 902 includes time map data 906. The relation between the separate file 902 and the time map data 906 is the same as that of FIG. 3.

The second file 903 includes normal broadcast 907, normal broadcast with program linked data broadcast 908, independent data broadcast 909, and independent audio broadcast 910.

The third file 904 includes Internet information 911 related to the broadcast, program additional information 912, director's cut information 913, director's comment information 914, E-commerce information 915, chat information 916, preview information 917, and the like. It should be noted that in the third file 904, other information related to the Internet may exist.

In FIG. 9, the second file includes the independent data broadcast 909 and the independent audio broadcast 910 but a separate file may be used. That is, it is also possible that the second file includes the normal broadcast and the normal broadcast with program linked data broadcast, the third file includes the independent data broadcast and the independent audio broadcast, and the fourth file includes Internet information related to the broadcast, program additional information, director's cut information, director's comment information, E-commerce information, chat information, and preview information. Alternatively, it is also possible that the second file includes the normal broadcast and the normal broadcast with program linked data broadcast, and the third file includes the independent data broadcast, the independent audio broadcast, the Internet information related to the broadcast, the program additional information, the director's cut information, the director's comment information, the E-commerce information, the chat information, and the preview information.

FIG. 10 shows an example in which after management data is recorded in the first file, time map data is recorded in a separate file, normal broadcast and data broadcast are recorded in the same second file, and Internet related information related to broadcast, program additional information, director's cut information, director's comment information, E-commerce information, chat information, and preview information are recorded in the third file, a part of the second file and/or a part of the third file is copied into the third file.

In FIG. 10, reference numeral 1001 denotes the first file, reference numeral 1002 denotes the separate file, reference numeral 1003 denotes the second file, and reference numeral 1004 denotes the third file.

The first file 1001 includes management data 1005. The management data 1005 will be described in detail later.

The separate file 1002 includes time map data 1006. The relation between the separate file 1002 and the time map data 1006 is the same as that of FIG. 3.

The second file 1003 includes normal broadcast 1007, normal broadcast with program linked data broadcast 1008, independent data broadcast 1009, and independent audio broadcast 1010.

The third file 1004 includes MPEG video data 1011, MPEG audio data 1012, JPEG data 1013, PNG data 1014, MNG data 1015, BML data 1016, Internet information 1017 related to the broadcast, program additional information 1018, director's cut information 1019, director's comment information 1020, E-commerce information 1021, chat information 1022, and preview information 1023. It should be noted that in the third file 1004, video data, audio data, and character data of other formats may exist. In addition, other information related to the Internet may exist.

In FIG. 10, arrows are shown in which a part of the normal broadcast with program linked data broadcast 1008 is copied to be recorded in the third file as broadcast extraction data, and parts of Internet information 1026 and program additional information 1027 are copied as related extraction information. For example, when the normal broadcast with program linked data broadcast 1008 is a movie "ΔΔ wars", it is possible that moving-picture information 1024 related to the battle scene and a still picture 1025 of a weapon are taken out to be copied as parts of the MPEG video data 1011 and the JPEG data 1013 into the third file 1004. In addition, when the Internet information 1017 related to the broadcast and the program additional information 1018 are information on the above-mentioned movie, battle scene BML information 1026 and weapon related still picture additional information 1027 can be taken out to be copied as parts of the BML data 1016 and the JPEG data 1013, respectively. The thus extracted MPEG video data 1011, the JPEG data 1013, and the BML data 1016 can be used for other application, stored in the form of a moving picture/still picture/information album, or subjected to editing, deletion, processing, particular reproduction, or the like alone.

In the above description, as an example, a part of the data is taken out but all of the data may be taken out. Also, instead of "copying", the data may be cut, or "moved", from the second or the third file (the original data is deleted). In addition, all or a part of the data may be directly recorded in the third file 1004 as the broadcast extraction data/related extraction data at the same time when the broadcast is recorded in the second file 1003 or Internet distribution is recorded in the third file 1004.

Furthermore, in the above description, the extracted data 1011 to 1016 and the broadcast related information 1017 to 1023 are commonly recorded in the third file 1004, but the extracted data 1011 to 1016 may be recorded in the third file and the broadcast related information 1017 to 1023 may be recorded in the fourth file.

Moreover, in each of the cases, the extracted data 1011 to 1016 may be all set as individual files.

FIG. 11 shows an example in which after management data is recorded in the first file, time map data is recorded in a separate file, normal broadcast and linked data broadcast are recorded in the second file, and independent data broadcast, independent audio broadcast, Internet information related to broadcast, program additional information, director's cut information, director's comment information, E-commerce information, chat information, and preview information are recorded in the third file, a part of the second and/or a part of the third file is copied into the third file.

In FIG. 11, reference numeral 1101 denotes the first file, reference numeral 1102 denotes the separate file, reference numeral 1103 denotes the second file, and reference numeral 1104 denotes the third file.

The first file 1101 includes management data 1105. The management data 1105 will be described in detail later.

The separate file 1102 includes time map data 1106. The relation between the separate file 1102 and the time map data 1106 is the same as that of FIG. 3.

The second file 1103 includes normal broadcast 1107 and broadcast with program linked data broadcast 1108.

The third file 1104 includes independent data broadcast 1109, independent audio broadcast 1110, MPEG video data 1111, MPEG audio data 1112, JPEG data 1113, PNG data 1114, MNG data 1115, BML data 1116, Internet information 1117 related to the broadcast, program additional information 1118, director's cut information 1119, director's comment information 1120, E-commerce information 1121, chat information 1122, and preview information 1123. It should be noted that in the third file 1104, video data, audio data, and character data of other formats may exist. In addition, other information related to the Internet may exist.

In FIG. 11, arrows are shown in which a part of the normal broadcast with program linked data broadcast 1108 is copied to be recorded in the third file as broadcast extraction data, and parts of the Internet information 1117 related to the broadcast and the program additional information 1118 are copied as related extraction information. For example, when the normal broadcast with program linked data broadcast 1108 is a movie "ΔΔ wars", it is possible that moving-picture information 1124 related to the battle scene and a still picture 1125 of a weapon are taken out to be copied as parts of the MPEG video data 1111 and the JPEG data 1113 into the third file 1104. In addition, when Internet information 1126 related to the broadcast recorded in the third file 1104 and the program additional information 1118 are information on the above-mentioned movie, battle scene BML information 1126 and weapon related still picture additional information 1127 can be taken out to be copied as parts of the MPEG data 1111 and the JPEG data 1113, respectively. The MPEG video data 1111, the JPEG data 1113, and the BML data 1116 can be used for other application, stored in the form of a moving picture/still picture/information album, or subjected to editing, deletion, processing, particular reproduction, or the like alone.

In the above description, as an example, a part of the data is taken out but all of the data may be taken out. Also, instead of "copying", the data may be cut, or "moved", from the second or the third file (the original data is deleted). In addition, all or a part of the data may be directly recorded in the third file 1104 as the broadcast/related extraction data at the same time when the broadcast is recorded in the second file 1103 or Internet distribution is recorded in the third file 1104.

Furthermore, in the above description, the data broadcast 1109 and 1110, the extracted data 1111 to 1116, and the broadcast related information 1117 to 1123 are recorded in the third file 1104, but the data broadcast 1109 and 1110 may be recorded in the third file, and the extracted data 1111 to 1116 and the broadcast related information 1117 to 1123 may be recorded in the fourth file.

Alternatively, the data broadcast 1109 and 1110 and the extracted data 1111 to 1116 may be recorded in the third file, and the broadcast related information 1117 to 1123 may be in the fourth file.

Alternatively, the extracted data 1111 to 1116 may be recorded in the third file, and the data broadcast 1109 and 1110 and the broadcast related information 1117 to 1123 may be in the fourth file.

Alternatively, the data broadcast 1109 and 1110 may be recorded in the third file, the extracted data 1111 to 1116 may be recorded in the fourth file, and the broadcast related information 1117 to 1123 may be in the fifth file.

Furthermore, in each of the cases, the extracted data 1111 to 1116 may be all set as individual files.

As the several examples have been described above, the MPEG video data 511, 604, 711, 805, 1011, and 1111 may include both the video data and the audio data.

In any of the above-mentioned examples, basically although not exclusively, the stream to be recorded in the second file is TS and the streams to be recorded in the third and subsequent files are not TS.

Next, the management file (304 in FIG. 3, 405 in FIG. 4, 505 in FIG. 5, 610 in FIG. 6, 705 in FIG. 7, 811 in FIG. 8, 905 in FIG. 9, 1005 in FIG. 10, and 1105 in FIG. 11) will be described in detail.

In the management file, the data broadcast recording file ID flag, the data broadcast ID flag, the broadcast related information record file ID flag, and the broadcast related information ID flag may be recorded.

The data broadcast recording file ID flag indicates whether or not the data broadcast is recorded in the relevant file, or a file name or number of the file in which the data broadcast is recorded.

The broadcast related information record file ID flag indicates whether or not the broadcast related information is recorded in the relevant file, or a file name or number of the file in which the broadcast related information is recorded.

The data broadcast ID flag indicates whether or not the data broadcast is recorded in the relevant stream. The data broadcast ID flag indicates whether the broadcast extraction data is the direct recording, copy, or move. Furthermore, the data broadcast ID flag indicates whether or not the source exists when the broadcast extraction data is copy or move, and also indicates a file name, a source stream name, a source stream number, and a type and compression method of the broadcast extraction data when the source exists. Herein, the type indicates one of moving picture/audio/still picture/animation/character data. Then, the compression method indicates a moving-picture data compression method in the case of the moving picture, an audio data compression method in the case of the audio, a still-picture data compression method in the case of the still picture, an animation data compression method in the case of the animation, and a character data compression method in the case of the character data.

The broadcast related information ID flag indicates whether or not the broadcast related information is recorded in the relevant stream. Also, the broadcast related information ID flag indicates whether the related extraction data is the direct recording, copy, or move. Furthermore, the broadcast related information ID flag indicates whether or not the source exists when the related extraction data is copy or move, and also indicates a file name, a source stream name, a source stream number, and a type and compression method of the related extraction data when the source exists. Herein, the type indicates one of moving picture/audio/still picture/animation/character data. Then, the compression method indicates a moving-picture data compression method in the case of the moving picture, an audio data compression method in the case of the audio, a still-picture data compression method in the case of the still picture, an animation data compression method in the case of the animation, and a character data compression method in the case of the character data.

In addition, a flag may be recorded in the management file, which indicates whether the data broadcast is included in the record stream/whether the data broadcast linked with the main broadcast is included/whether the independent data broadcast that is not linked with the main broadcast is included/whether the independent audio broadcast that is not linked with the main broadcast is included/whether the Internet information or streaming data is included. Furthermore, a flag may be recoded, indicating a normal broadcast stream or a storage broadcast stream. Also, flags may be recoded in the management file, indicating the moving-picture data compression method, the audio data compression method, the still-picture data compression method, and the animation data compression method. Then, the management file may include a flag indicating whether a transmission method of the data broadcast is a data carrousel mode/an event message transmission mode/a mode including both the modes, and a flag indicating whether the mode is a mode for recording all the broadcast data or a mode for recording only refresh data in the case of the data carrousel broadcast. Moreover, the management file may include a flag indicating whether auto renewal is performed (ON/OFF) on the data in which news, weather forecast, stock information, or the like is recorded to provide updated data and information indicating an updated data refresh time. In addition, the management file may include a flag indicating whether or not the time map exists.

The above-mentioned moving-picture compression method includes MPEG video, H.264 video, or Windows (registered trademark) Media video, for example. Also, the audio data compression method includes MPEG audio, Dolby audio, or DTS audio, for example. Then, the still-picture data compression method includes JPEG or PNG, for example.

All the data of the management file may not necessarily be recorded, and only a part thereof may be recorded.

FIGS. 12A to 12D show a specific example of the file structure recorded in the HDD 113 or the DVD 114. Herein, the entire file name is set as DVD_HDVR.

DVD_HDVR includes files such as an HR_MANGR.IFO file, an HR_STAMP.IFO file, an HR_STRMx.SRO file, and an HR_EXTBC.DAT file. All of these file do not necessarily exist, and other files such as a backup file may also exist.

The management file (304 in FIG. 3, 405 in FIG. 4, 505 in FIG. 5, 610 in FIG. 6, 705 in FIG. 7, 811 in FIG. 8, 905 in FIG. 9, 1005 in FIG. 10, and 1105 in FIG. 11) is recorded in the HR_MANGR.IFO file.

The HR_MANGR.IFO file includes Stream File Information Table (STM_AVFIT), Extra Broadcast File Information Table (EXT _AVFIT), and other data.

Stream File Information Table (STM_AVFIT) includes STM_AVFIT Information, SOB Stream Information #1 to SOB Stream Information #n, and other data. SOB Stream Information is generated one by one each time broadcast recording or broadcast/related extraction data recording is performed.

STM_AVFIT Information includes the following flags and data.
· Data broadcast recording file ID flag: data broadcast recording file ID flag
   The flag data has 3 or more bits. The following statuses are indicated and other bits remain reserved.
   zeroth bit 0: data broadcast is not included in HR_STRMx.SRO, 1: included
   first bit 0: data broadcast linked with main broadcast is not included in HR_STRMx.SRO, 1: included
   second bit 0: independent data broadcast is not included in HR_STRMx.SRO, 1: included
   third bit 0: independent audio (radio) broadcast is not included in HR_STRMx.SRO, 1: included
· Broadcast related data recording file ID flag: broadcast related information recording file ID flag
   The flag data has 1 or more bits. The following statuses are indicated and other bits remain reserved.
   zeroth bit 0: broadcast related information is not included in HR_STRMx.SRO, 1: included
   SOB Stream Information includes STM_ATR (Stream Attribute) and other date.
   STM_ATR includes the following flags and data.
· Data broadcast ID flag: data broadcast ID flag
   The flag data has 3 or more bits. The following statuses are indicated and other bits remain reserved.
   zeroth bit 0: data broadcast is not included in SOB, 1: included
   first bit 0: data broadcast linked with main broadcast is not included in SOB, 1: included
   second bit 0: independent data broadcast is not included in SOB, 1: included
   third bit 0: independent audio (radio) broadcast is not included in SOB, 1: included
· Broadcast related data ID flag: broadcast related information ID flag
   The flag data has 1 or more bits. The following statuses are indicated and other bits remain reserved.
   zeroth bit 0: broadcast related information is not included in SOB, 1: included
· Broadcast related data content: broadcast related information content
   In the case of 00, Internet data (streaming). In the case of 01 to 11, reserved.
· Broadcast video mode: compression method for broadcasting video data
   In the case of 000, MPEG-2. In the case of 001, MPEG-1. In the case of 010, MPEG-4. In the case of 011, H.264. In the case of 100, WM9. In the case of 101 to 111, reserved.
· Broadcast audio mode: compression method for broadcasting audio data
   In the case of 000, MPEG-2 AAC. In the case of 001, Dolby AC-3. In the case of 010, MPEG-1. In the case of 011, MPEG-2 BC. In the case of 100, DTS. In the case of 101, LPCM. In the case of 110 and 111, reserved.
· Broadcast still-picture mode: compression method for broadcasting still picture
   In the case of 000, JPEG. In the case of 001, PNG. In the case of 010 to 111, reserved.
· Broadcast animation mode: compression method for broadcasting animation
   In the case of 000, MNG. In the case of 001 to 111, reserved.
· Data broadcast mode: broadcasting data broadcast method
   In the case of 000, BML. In the case of 001 to 111, reserved.
· Data transmission mode: data transmission mode
   In the case of 00, data carrousel mode. In the case of 01, event message transmission mode. In the case of 10, transmission mode including both the modes. In the case of 11, reserved.
· Data Carrousel Auto renewal: data carrousel auto renewal mode
   In the case of 00, broadcast Data Carrousel all data recording mode. In the case of 01, selected recording mode for renewal data in broadcast Data Carrousel. In the case of 10 and 11, reserved.
· Refresh flag: Updated data refresh flag
   In the case of 00, old data auto refresh OFF with new data in news, weather forecast, stock information, or the like. In the case of 01, old data auto refresh ON with new data in news, weather forecast, stock information, or the like. In the case of 10 and 11, reserved.
· Refresh time: Updated data refresh time (5 bytes)
   Year (14 bits), month (4 bits), day (5 bits), hour (5 bits), minute (6 bits), and second (6 bits).
· Time map flag: the presence or absence of time map
   In the case of 00, there is no time map. In the case of 01, there is a time map. In the case of 10 and 11, reserved.
· Storage broadcast flag: storage broadcast stream display
   In the case of 00, this SOB is a normal broadcast stream. In the case of 01, this SOB is a storage broadcast stream. In the case of 10 and 11, reserved.
   Extra Broadcast File Information Table (EXT_AVFIT) includes EXT_AVFIT Information, EXT Stream Information #1 to EXT Stream Information #n, and other data.
   EXT_AVFIT Information includes the following flags and data.
· Data broadcast recording file ID flag: data broadcast recording file ID flag
   The flag data has 3 or more bits. The following statuses are indicated and other bits remain reserved.
   zeroth bit 0: data broadcast is not included in HR_EXTBC.DAT, 1: included
   first bit 0: data broadcast linked with main broadcast is not included in HR_EXTBC.DAT, 1: included
   second bit 0: independent data broadcast is not included in HR_EXTBC.DAT, 1: included
   third bit 0: independent audio (radio) broadcast is not included in HR_EXTBC.DAT, 1: included
· Broadcast related data recording file ID flag: broadcast related information recording file ID flag
   The flag data has 1 or more bits. The following statuses are indicated and other bits remain reserved.
   zeroth bit 0: broadcast related information is not included in HR_EXTBC.DAT, 1: included
   Extra Stream Information includes EXT_ATR (Extra Stream Attribute) and other data.
   EXT_ATR includes the following flags and data.
· Data broadcast ID flag: data broadcast ID flag The flag data has 3 or more bits. The following statuses are indicated and other bits remain reserved.
   zeroth bit 0: data broadcast is not included in Extra Stream, 1: included
   first bit 0: data broadcast linked with main broadcast is not included in Extra Stream, 1: included
   second bit 0: independent data broadcast is not included in Extra Stream, 1: included
   third bit 0: independent audio (radio) broadcast is not included in Extra Stream, 1: included
· Broadcast related data ID flag: broadcast related information ID flag
   The flag data has 1 or more bits. The following statuses are indicated and other bits remain reserved.
   zeroth bit 0: broadcast related information is not included in Extra Stream, 1: included
· Broadcast related data content: broadcast related information content
   In the case of 00, the broadcast related information is Internet data (streaming). In the case of 01 to 11, reserved.
· Copy move information: copy information
   * Copy move flag: copy or move
      In the case of 000, original. In the case of 001, copy. In the case of 010, move. In the case of 011 to 111, reserved.
   * Source file information: source file information
      In the case of 00, no source exists. In the case of 01, the source exists in HR_STRMx.SRO. In the case of 10, the source exists in HR_EXTBC.DAT. In the case of 11, reserved.
   * Source stream name: source stream name
   * Source stream number: source stream number
· Broadcast video mode: compression method for broadcasting video data
   In the case of 000, MPEG-2. In the case of 001, MPEG-1. In the case of 010, MPEG-4. In the case of 011, H.264. In the case of 100, WM9. In the case of 101 to 111, reserved.
· Broadcast audio mode: compression method for broadcasting audio data
   In the case of 000, MPEG-2 AAC. In the case of 001, Dolby AC-3. In the case of 010, MPEG-1. In the case of 011, MPEG-2 BC. In the case of 100, DTS. In the case of 101, LPCM. In the case of 110 and 111, reserved.
· Broadcast still-picture mode: compression method for broadcasting still picture
   In the case of 000, JPEG. In the case of 001, PNG. In the case of 010 to 111, reserved.
· Broadcast animation mode: compression method for broadcasting animation
   In the case of 000, MNG. In the case of 001 to 111, reserved.
· Data broadcast mode: broadcasting data broadcast method
   In the case of 000, BML. In the case of 001 to 111, reserved.
· Data transmission mode: data transmission mode
   In the case of 00, data carrousel mode. In the case of 01, event message transmission mode. In the case of 10, transmission mode including both the modes. In the case of 11, reserved.
· Data Carrousel Auto renewal: data carrousel auto renewal mode
   In the case of 00, broadcast Data Carrousel all data recording mode. In the case of 01, selected recording mode for renewal data in broadcast Data Carrousel. In the case of 10 and 11, reserved.
· Refresh flag: Updated data refresh flag
   In the case of 00, old data auto refresh OFF with new data in news, weather forecast, stock information, or the like. In the case of 01, old data auto refresh ON with new data in news, weather forecast, stock information, or the like. In the case of 10 and 11, reserved.
· Refresh time: Updated data refresh time (5 bytes)
   Year (14 bits), month (4 bits), day (5 bits), hour (5 bits), minute (6 bits), and second (6 bits).
· Time map flag: the presence or absence of time map
   In the case of 00, there is no time map. In the case of 01, there is a time map. In the case of 10 and 11, reserved.
· Storage broadcast flag: storage broadcast stream display
   In the case of 00, this SOB is a normal broadcast stream. In the case of 01, this SOB is a storage broadcast stream. In the case of 10 and 11, reserved.
   HR_STMAP.IFO is a time map table, which includes the following.
· 1STREF_SZ: SOBU first reference picture size
· DATABC_PB_TM: SOBU reproduction time (the number of video fields)
· DATABC_SZ: SOBU size (the number of sectors)
   HR_STRMx.SRO is a stream data file, which includes normal broadcast, program linked data broadcast, independent data broadcast, and independent audio data broadcast.
   HR_EXTBC.DAT includes a data file obtained through data broadcast direct recording or copying or moving a part of the data, or other stream.
   Incidentally, with the management data, data broadcast recording and copy are performed in the following manner.
   The user inputs and specifies independent data broadcast recording, a source file or a stream to be copied, a copy start time and end time to the data broadcast recording and reproducing device. This is performed generally by specifying a start point and end point of a particular data broadcast content with use of a remote controller.
   This input specification is given to the data broadcast recording and reproducing device as the control signal 103 in FIG. 1, and determination of the source file and the copy destination file, generation of the management file, and copy control are performed in the record control section 116.
   For example, the source file and the copy destination file are specified as HR_STRMx.SRO and HR_EXTBC.DAT, respectively.
   Then, the specified source file and stream are copied into the specified copy destination file in accordance with the copy start time and end time.
   The management data is recorded in HR_MANGR.IFO. For example, the following setting is performed in STM_AVFIT Information of Stream File Information Table (STM_AVFIG) in the management data.
· Data broadcast recording file ID flag
   zeroth bit 0: no data broadcast is included in HR_STRMx.SRO.
   first bit 0: no data broadcast linked with main broadcast is included in HR_STRMx.SRO.
   second bit 1: independent data broadcast is included in HR_STRMx.SRO.
   third bit 0: no independent audio (radio) is included in HR_STRMx.SRO.
· Broadcast related data recording file ID flag
   zeroth bit 0: no broadcast related information is included in HR_STRMx.SRO.
      The following setting is performed in STM_ATR (Stream Attribute) of SOB Stream Information (Stream Attribute) of STM_AVFIT.
· Data broadcast ID flag
   zeroth bit 0: no data broadcast is included in SOB.
   first bit 0: no data broadcast linked with main broadcast is included in SOB.
   second bit 1: independent data broadcast is included in SOB.
   third bit 0: no independent audio (radio) is included in SOB.
· Broadcast related data ID flag
   zeroth bit 0: no broadcast related information is included in SOB.
· Broadcast related data content: 00 broadcast related information is Internet data (streaming)
· Broadcast video mode: 000 MPEG-2
· Broadcast audio mode: 000 MPEG-2 AAC
· Broadcast still-picture mode: 000 JPEG
· Broadcast animation mode: 000 MNG
· Data broadcast mode: 000 BML
· Data transmission mode: 00 data carrousel mode
· Data Carrousel Auto renewal: 00 broadcast Data Carrousel all data recording mode
· Refresh flag: 00 auto refresh OFF
· Refresh time: updated data refresh time
· Time map flag: 00 no time map exists
· Storage broadcast flag: 00 normal broadcast stream
   The following setting is performed in EXT_AVFIT Information of Extra Broadcast File Information Table (EXT_AVFIT).
· Data broadcast recording file ID flag
   zeroth bit 0: no data broadcast is included in HR_EXTBC.DAT.
   first bit 0: no data broadcast linked with main broadcast is included in HR_EXTBC.DAT.
   second bit 1: independent data broadcast is included in HR_EXTBC.DAT.
   third bit 0: no independent audio (radio) is included in HR_EXTBC.DAT.
· Broadcast related data recording file ID flag
   zeroth bit 0: no broadcast related information is included in HR_EXTBC.DAT.
      The following setting is performed in EXT_ATR (Extra Stream Attribute) of Extra Stream Information of EXT_AVFIT.
· Data broadcast ID flag
   zeroth bit 0: no data broadcast is included in Extra Stream.
   first bit 0: no data broadcast linked with main broadcast is included in Extra Stream.
   second bit 1: independent data broadcast is included in Extra Stream.
   third bit 0: no independent audio (radio) is included in Extra Stream.
· Broadcast related data ID flag: Broadcast related information ID flag
   zeroth bit 0: no broadcast related information is included in Extra Stream.
· Broadcast related data content: 00 broadcast related information is Internet data (streaming)
· Copy move information: copy information
   * Copy move flag: 001 copy
   * Source file information: 01 the source exists in HR_STRMx.SRO
   * Source stream name: source stream name
   * Source stream number: source stream number
· Broadcast video mode: 000 MPEG-2
· Broadcast audio mode: 000 MPEG-2 AAC
· Broadcast still-picture mode: 000 JPEG
· Broadcast animation mode: 000 MNG
· Data broadcast mode: 000 BML
· Data transmission mode: 00 data carrousel mode
· Data Carrousel Auto renewal: 00 broadcast Data Carrousel all data recording mode
· Refresh flag: 00 auto refresh OFF
· Refresh time: updated data refresh time
· Time map flag: 00 no time map exists
· Storage broadcast flag: 00 normal broadcast stream
   As has been described above, with the data recording and reproduction device according to the embodiment of the present invention, the normal broadcast and the data broadcast are recorded in the second file. All or a part of the data broadcast recorded in the second file is copied or moved into the third file. Also, all or a part of the broadcast related information represented by the Internet information related to the broadcast is copied or moved into the third file. As a result, it is possible to easily record the data broadcast, and at the same time the recorded data broadcast can be separated from the main broadcast, thereby easily realizing the storage, editing, deletion, processing, particular reproduction, and the like.
   The data broadcast recording file ID flag and the broadcast related information recording file ID flag may be separately displayed and may be also displayed simultaneously. In addition, the data broadcast ID flag and the broadcast related information flag may be separately displayed and may be also displayed simultaneously.
   The management data shown in the above may be different in the data structure, the data arrangement order, the flag name, the number of bits, and the bit allocation from the examples.
   In the management data shown in the above, all the exemplified data may not necessarily exist, and a part of the data may also exist.
   The generation unit of the management data shown in the above may be a much larger unit or may be a smaller unit too.
   Also, a start address, an end address, and a data length when these pieces of the management data are recorded may be appropriately recorded.
   A data recording device for recording data on the basis of the recording method described above or a data reproduction device for reproducing data recorded on the basis of the recording method described above is also within the scope of the present invention.
   Furthermore, it is needless to mention that a recording medium on which recording is performed on the basis of the recording method described above is also within the scope of the present invention. In this case, the recording medium may have an area for recording data broadcast and a separate area for recording management data for managing the data broadcast.

## Claims

1. A data broadcast recoding method, **characterized by** comprising:
recording management data in a first file; and recording normal broadcast and
data broadcast in at least one file different from the first file.

2. The data broadcast recoding method according to Claim 1, **characterized in that** the normal broadcast and the data broadcast are commonly recorded in a second file.

3. The data broadcast recoding method according to Claim 1, **characterized in that** the normal broadcast is recorded in a second file, the data broadcast is recorded in the second file or a third file, and whether the data broadcast is recorded in the second file or the third file is indicated by a data broadcast recording file ID flag in the management data.

4. The data broadcast recoding method according to Claim 1, **characterized in that** the normal broadcast and the data broadcast is recorded in a second file, data obtained by copying or cutting all or a part of the data broadcast or all or a part of recorded data broadcast recorded in the second file is recorded in a third file as broadcast extraction data, and a content of the broadcast extraction data is indicated by a data broadcast ID flag in the management data.

5. The data broadcast recoding method according to Claim 1, **characterized in that** the normal broadcast and the data broadcast are recorded in a second file, data obtained by copying or cutting all or a part of the data broadcast or all or a part of recorded data broadcast recorded in the second file is recorded in any of third and subsequent files as broadcast extraction data in accordance with a combination of a data type and an encoding format, and a content of the broadcast extraction data is indicated by a data broadcast ID flag in the management data.

6. The data broadcast recoding method according to Claim 1, **characterized in that** the normal broadcast is recorded in a second file, the data broadcast is recorded in the second file or a third file, data obtained by copying or cutting all or a part of the data broadcast or all or a part of recorded data broadcast recorded in the second or third file is recorded in the third file or a fourth file as broadcast extraction data, whether the data broadcast is recorded in the second file or the third file is indicated by a data broadcast recording file ID flag in the management data, and a content of the broadcast extraction data is indicated by a data broadcast ID flag in the management data.

7. The data broadcast recoding method according to Claim 1, **characterized in that** the normal broadcast is recorded in a second file, the data broadcast is recorded in the second file or a third file, data obtained by copying or cutting all or a part of the data broadcast or all or a part of recorded data broadcast recorded in the second or third file is recorded in any of fourth and subsequent files as broadcast extraction data in accordance with a combination of a data type and an encoding format, whether the data broadcast is recorded in the second file or the third file is indicated by a data broadcast recording file ID flag in the management data, and a content of the broadcast extraction data is indicated by a data broadcast ID flag in the management data.

8. The data broadcast recoding method according to Claim 1, **characterized in that** broadcast related information is recoded in a file different from the first file and a file for recording the normal broadcast.

9. The data broadcast recoding method according to Claim 2, **characterized in that** broadcast related information is recorded in a third file, and a content of the broadcast related information is indicated by a broadcast related information ID flag in the management data.

10. The data broadcast recoding method according to Claim 3, **characterized in that** broadcast related information is recorded in the third file or a fourth file as record broadcast related information, whether the broadcast related information is recorded in the third file or the fourth file is indicated by a broadcast related information recording file ID flag in the management data, a content of the record broadcast related information is indicated by a broadcast related information ID flag in the management data.

11. The data broadcast recoding method according to Claim 4, **characterized in that** broadcast related information is recorded in the third file or a fourth file, data obtained by copying or cutting all or a part of the broadcast related information or all or a part of record broadcast related information recorded in the third file or the fourth file is recorded in the third file as related extraction data, whether the broadcast related information is recorded in the third file or the fourth file is indicated by a broadcast related information recording file ID flag in the management data, and a content of the record broadcast related information and a content of the related extraction data are indicated by a broadcast related information ID flag in the management data.

12. The data broadcast recoding method according to Claim 5, **characterized in that** broadcast related information is recorded in a new file, data obtained by copying or cutting all or a part of the broadcast related information or all or a part of record broadcast related information recorded in the new file is recorded as related extraction data in a file corresponding to the encoding format, which file the broadcast related information is recorded in is indicated by a broadcast related information recording file ID flag in the management data, and a content of the record broadcast related information and a content of the related extraction data is indicated by a broadcast related information ID flag in the management data.

13. The data broadcast recoding method according to Claim 6, **characterized in that** broadcast related information is recorded in the third file or a fourth file as record broadcast related information, data obtained by copying or cutting all or a part of the broadcast related information or all or a part of the record broadcast related information is recorded in the third file as related extraction data, whether the broadcast related information is recorded in the third file or the fourth file is indicated by a broadcast related information recording file ID flag in the management data, a content of the record broadcast related information and a content of the related extraction data is indicated by a broadcast related information ID flag in the management data.

14. The data broadcast recoding method according to Claim 7, **characterized in that** broadcast related information is recorded in a new file as record broadcast related information, data obtained by copying or cutting all or a part of the broadcast related information or all or a part of the record broadcast related information is recorded as related extraction data in a file corresponding to the encoding format, which file the broadcast related information is recorded in is indicated by a broadcast related information recording file ID flag in the management data, and a content of the record broadcast related information and a content of the related extraction data is indicated by a broadcast related information ID flag in the management data.

15. The data broadcast recoding method according to any one of Claims 8 to 14, **characterized in that** the broadcast related information comprises all or a part of Internet additional information including Internet information related to broadcast, program additional information, director's cut information, director's comment information, E-commerce information, chat information, and preview information.

16. The data broadcast recoding method according to any one of Claims 4 to 7 and 11 to 14, **characterized in that** the broadcast extraction data or the related extraction data comprises all or a part of moving-picture data, still-picture data, audio data, animation data, graphic data, and character data.

17. The data broadcast recoding method according to any one of Claims 1 to 14, **characterized in that** the data broadcast includes program linked data broadcast, independent data broadcast, audio broadcast, or radio broadcast.

18. The data broadcast recoding method according to any one of Claims 3, 6, 7, 9, 13, and 14, **characterized in that** if the data broadcast is program linked data broadcast, the data broadcast is recorded in the second file, and if the data broadcast is independent data broadcast, the data broadcast is recorded in the third file.

19. The data broadcast recoding method according to any one of Claims 1 to 14, **characterized in that**:
the data broadcast recording file ID flag in the management data or the broadcast related information recording file flag indicates whether the data broadcast or the broadcast related information is recorded in a relevant file or a file in which the data broadcast or the broadcast related information is recorded; and
the data broadcast ID flag in the management data or the broadcast related information recording file flag indicates all or a part of whether the data broadcast or the broadcast related information is recorded in a relevant stream, whether the broadcast extraction data/the related extraction data is obtained through direct recording, copying, or move, and a file name, a source stream name, a source stream number, and a type and a compression method of the broadcast extraction data/the related extraction data if a source exists in the case in which the broadcast extraction data/the related extraction data is obtained by copying or move.

20. The data broadcast recoding method according to any one of Claims 1 to 14, **characterized in that** all or a part of a flag indicating whether data broadcast is included in a record stream/whether data broadcast linked with the main broadcast is included/whether independent data broadcast that is not linked with the main broadcast is included/whether independent audio broadcast that is not linked with the main broadcast is included/whether Internet information or streaming data is included, a flag indicating a normal broadcast stream or a storage broadcast stream, a flag indicating a compression method, a flag indicating whether a transmission method of the data broadcast is a data carrousel mode/an event message transmission mode/a mode including both the modes, a flag indicating whether the mode is a mode for recording all the broadcast data or a mode for recording only refresh data in the case of the data carrousel mode, a flag indicating whether auto renewal is performed in the case in which the broadcast extraction data/the related extraction data is news, weather forecast, stock information, or the like, a flag indicating whether a updated data refresh time and a time map exist, is recorded in the first file.

21. The data broadcast recoding method according to Claim 18 or 19, **characterized in that** the flag indicating the compression method includes all or a part of a moving-picture data compression method flag indicating a type of MPEG video, H.264 video, or Windows (registered trademark) Media video, an audio data compression method flag indicating a type of MPEG audio, Dolby audio, or DTS audio, a still-picture data compression method flag indicating a type of JPEG or PNG.

22. A data recording device for recording data through the data broadcast recoding method according to any one of Claims 1 to 14 and/or a data reproduction device for reproducing data recorded through the data broadcast recoding method.

23. A recording medium on which recording is performed through the recoding method according to any one of Claims 1 to 14.

24. A recording medium, **characterized by** comprising a file for recording data broadcast and a separate file for recording management data related to the broadcast.

25. The recording medium according to Claim 24, **characterized in that** in the separate file, data related to a type of broadcast data is recorded as the management data.

26. The recording medium according to Claim 25, **characterized in that** the data related to the type of the data broadcast includes a data broadcast recording file ID flag and/or a data broadcast ID flag.

27. The recording medium according to Claim 26, **characterized in that** the data related to the type of the data broadcast further includes broadcast related information recording file ID flag and/or broadcast related information ID flag.
